# EUROPEAN PATENT SPECIFICATION

(11) **EP 3 851 325 B1**
(45) Date of publication and mention of the grant of the patent: **11.01.2023**
(21) Application number: 20205841.8
(22) Date of filing: 05.11.2020
(51) Int. Cl.: B60R 7/04, H04M 1/02

(54) **MORPHING SURFACE APPARATUS AND RELATED METHODS**
VORRICHTUNG MIT VERÄNDERLICHER OBERFLÄCHE UND VERFAHREN HIERFÜR
DISPOSITIF AVEC CHANGEMENT DE SURFACE ET PROCEDES ADAPTES

(30) Priority: 09.12.2019 US 201916707119
(43) Date of publication of application: 21.07.2021
(73) Proprietor: Continental Automotive Systems, Inc., Auburn Hills MI 48326 (US)
(72) Inventor: Brown, Arthur S., 65824 Schwalbach a. Ts. (DE); Schwegler, Jason, 65824 Schwalbach a. Ts. (DE)
(74) Representative: Continental Corporation

(56) References cited:
- EP-A2- 2 179 918
- WO-A1-2012/054005
- WO-A2-2012/099850
- WO-A2-2019/137959
- US-B1- 9 460 557

## Description

### TECHNICAL FIELD

The disclosure herein relates to a morphing surface device cradle.

### TECHNICAL BACKGROUND

Common experience of modern vehicles is dealing with keyless entry fobs and smart phones. Key fobs with a low battery require specific placement in the vehicle to function. Since this need is rare, it can challenge the user when it occurs since they may not be aware of where to place the fob or other similar devices. Current strategies include a dedicated molded pocket inside a center console storage or a specific pocket accessed by removing a trim piece or insert. WO 2019/ 137959 A2 discloses a state of the art morphing surface pocket for a bottle in a vehicle.

In addition, cell phones have charging options in vehicles, which now includes inductive charging. The cell phones have a variety of sizes which can make placing them receptacles challenging. Current strategies include an integrated (or aftermarket) mechanical clamp that can be adjusted to accommodate some devices, or an open storage tray where the device has negligible restraint.

What is needed is a better way to provide a shared space for both devices such as key fobs and cell phones, which would benefit the user experience.

### SUMMARY

A morphing surface apparatus comprising two or more projection members movable from at least a first position and a second position and from the second position to the first position, in the first position the projection members are recessed below an auxiliary surface having an outer skin, the projection members projected through the auxiliary surface in the second position, in the second position the projection members stretching the outer skin away from the auxiliary surface and creating a pocket, the pocket configured to retain at least one device therein, the at least one device including at least one of a key fob and cell phone.

In one or more embodiments, further comprising four projection members having a generally rectangular shape in the second position.

In one or more embodiments, further comprising a sensor disposed adjacent the pocket, the sensor configured to sense proximity of the at least one device.

In one or more embodiments, further comprising at least one illumination source disposed adjacent to the pocket.

In one or more embodiments, the at least one illumination source is disposed below the auxiliary surface.

In one or more embodiments, at least one illumination source disposed adjacent to the projection members.

In one or more embodiments, the at least one illumination source is disposed below the auxiliary surface.

In one or more embodiments, a method comprises moving two or more projection members from a first position to a second position, in the first position the two or more projection members are recessed below an auxiliary surface having an outer skin, the two or more projection members projected through the auxiliary surface in the second position, in the second position the two or more projection members stretching the outer skin away from the auxiliary surface, creating a pocket with the two or more projection members to retain at least one of a key fob or cell phone therein.

In one or more embodiments, further comprising illuminating the pocket with at least one illumination source disposed adjacent to the pocket.

In one or more embodiments, illuminating the pocket includes illuminating with at least one illumination source disposed below the auxiliary surface.

In one or more embodiments, further comprising illuminating the projection members with at least one illumination source disposed adjacent to the pocket.

In one or more embodiments, illuminating the projection members includes illuminating with at least one illumination source disposed below the auxiliary surface.

In one or more embodiments, further comprising moving the projection members from the second position to the first position.

### BRIEF DESCRIPTION OF THE DRAWINGS

FIG. 1 illustrates an auxiliary surface, as constructed in accordance with one or more embodiments.
FIG. 2 illustrates an apparatus, as constructed in accordance with one or more embodiments.
FIG. 3 illustrates an apparatus, as constructed in accordance with one or more embodiments.
FIG. 4 illustrates an apparatus, as constructed in accordance with one or more embodiments.
FIG. 5 illustrates an apparatus, as constructed in accordance with one or more embodiments.
FIG. 6 illustrates an apparatus, as constructed in accordance with one or more embodiments.
FIG. 7 illustrates an apparatus, as constructed in accordance with one or more embodiments.

These and other embodiments, aspects, advantages, and features of the present invention will be set forth in part in the description which follows and will become apparent to those skilled in the art by reference to the following description of the invention and referenced drawings or by practice of the invention. The aspects, advantages, and features of the invention are realized and attained by the instrumentalities, procedures, and combinations pointed out in the appended claims.

### DETAILED DESCRIPTION

The following detailed description includes references to the accompanying drawings, which form a part of the detailed description. The drawings show, by way of illustration, specific embodiments in which the apparatus may be practiced. These embodiments, which are also referred to herein as "examples" or "options," are described in enough detail to enable those skilled in the art to practice the present embodiments. The embodiments may be combined, other embodiments may be utilized, or structural or logical changes may be made without departing from the scope of the invention. The following detailed description is, therefore, not to be taken in a limiting sense and the scope of the invention is defined by the appended claims.

Morphing surface technology could be applied to a vehicle interior to create a functional cradle for either key fob or smart devices, which reveals itself only when needed. The cradle could be created by a few strategies, which include protruding ribs from the main surface to frame the device around all or most of its perimeter or creating a recess to hold the device. The mechanism that creates the cradle could be designed such that it accommodates multiple device sizes. Additionally, illuminated graphics could bring more attention to the feature when it is active, helping guide the user to place their device. In the circumstance of a low battery keyfob, which is detected by the access system, the cradle can be automatically revealed in a size appropriate for the keyfob. This could supplement additional messages shown on the vehicle information displays.

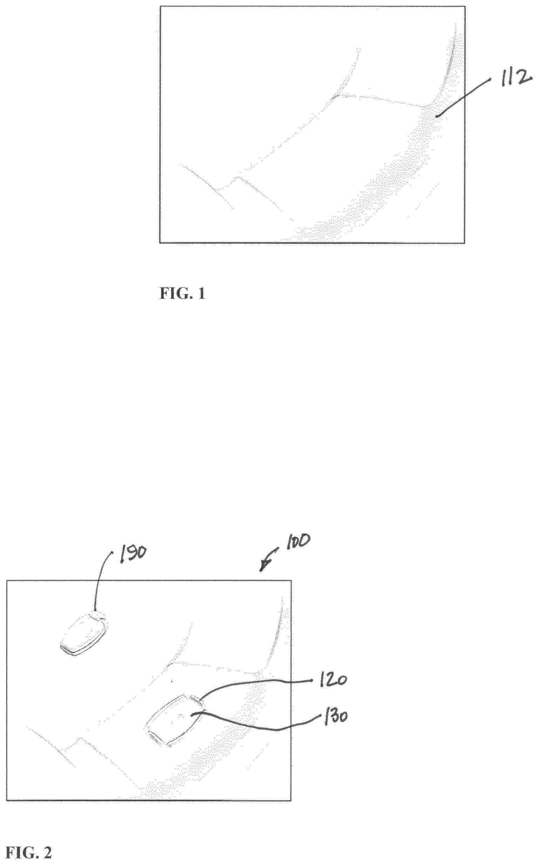

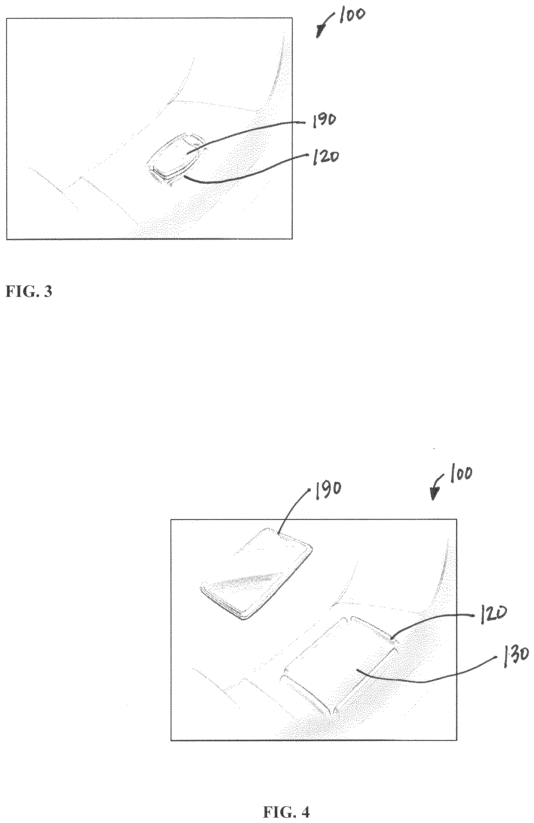

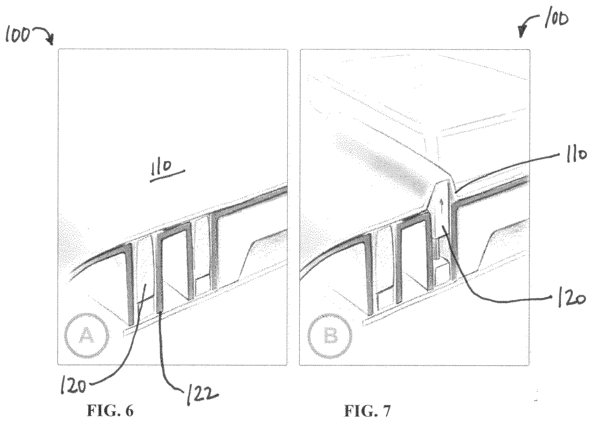

Referring to FIGs. 1 - 7, in one or more embodiments, an apparatus 100 includes two or more projection members 120 movable from at least a first position and a second position and from the second position to the first position. In the first position, as shown in FIG. 6, the projection members are recessed below an auxiliary surface 112 having an outer skin 110. In the second position, as shown in FIG. 7, the projection members 120 are projected through the auxiliary surface 112, and in the second position the projection members 120 stretch the outer skin 110 away from the auxiliary surface and creating a pocket 130, as shown in FIGs. 3 and 4, where the pocket 130 is configured to retain at least one device 190 therein, as shown in FIGs. 3, 5, and 7. The at least one device 190 includes, but is not limited to, a key fob, a smart device, and/or a cell phone. The projection members 120 forming the pocket or cradle can be on a geric surface of a vehicle, such as, but not limited to, a vehicle center console.

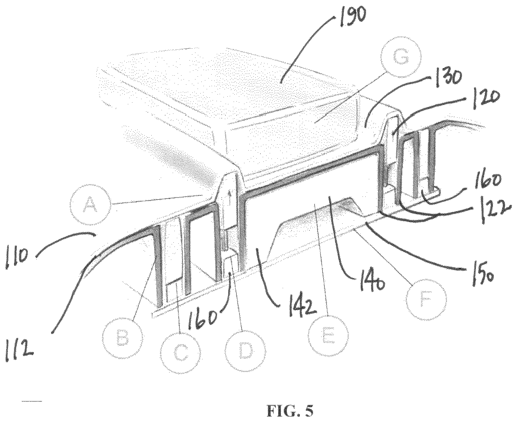

In one or more embodiments, multiple projection members 120 are provided, as shown in FIGs. 5 - 7 to accommodate different sized devices. For example, if a larger device such as a smart phone, is sensed, the outer walls would extend up to accommodate the larger device. If a smaller device having a smaller footprint, such as a key fob, is sensed by sensor 160, the inner walls would extend to fit the smaller size.

In one or more embodiments, the projection members 120 are movable within projection member guides 122 which can include a substrate. The projection members 120 can be moved along a ridge using solenoids or other small motors, for example. The projection members 120 are moved to an extended position where walls can be formed for the creating of the pocket 130. In one or more embodiments, there are four projection members 120 which collectively, when raised up into the second position, form a square or rectangular shape to receive the device in the pocket 130.

In one or more embodiments, the outer skin 110 is a stretchable, translucent surface material. In one or more embodiments, an illumination source 140 is disposed adjacent to the outer skin 110, for example below the outer skin 110 such that the illumination source 140 can light up the outer skin 110 near the pocket and/or the projection members 120. In one or more embodiments, the at least one illumination source 140 is disposed below the auxiliary surface 112. In one or more embodiments, the at least one illumination source 140 includes a light guide.

The apparatus 100 further optionally includes at least one inductive charger 142 disposed adjacent to the pocket 130. The sensor 160 senses whether the device 190 has a low battery, and a signal is sent to the charger 132 to provide a charge to the device 190 while the device 190 is disposed in the pocket 130. The apparatus further optionally includes a printed circuit board (PCB) 150 to provide additional functionality.

Advantages of the system include potentially improving user experience by having a fob cradle reveal itself when needed, directly indicating where to place the fob; ability to securely position one or more smart device sizes, including a key fob, for purposes that include storage, charging, or connecting to the vehicle; and functional "wow" effect with function that supports current trend for minimalist interior styling.

The above description is intended to be illustrative, and not restrictive. Many other embodiments will be apparent to those of skill in the art upon reading and understanding the above description.

## Claims

1. A morphing surface apparatus comprising:
two or more projection members (120) movable from at least a first position (C) and to a second position (D) and from the second position(D) to the first position(C);
in the first position(C) the projection members (120) are recessed below an auxiliary surface (112) having an outer skin (110);
the projection member (120) projected through the auxiliary surface (112) in the second position(D); in the second position(D) the projection members (120) stretching the outer skin (110) away from the auxiliary surface (112) and creating a pocket (130);
the outer skin (110) movable back from the created pocket (130) to the auxiliary surface (112) when the two or more projection members (120) move from the second(D) to the first position(C) and
the pocket (130) configured to retain at least one device therein, the at least one device including at least one of a key fob and cell phone (190).

2. The apparatus as recited in claim 1, further comprising four projection members collectively having a generally outer rectangular shape in the second position (D).

3. The apparatus as recited in claim 1, further comprising a sensor disposed adjacent the pocket (130) the sensor configured to sense proximity of the at least one device (190).

4. The apparatus as recited in claim 1, further comprising at least one illumination source disposed adjacent to the pocket (130).

5. The apparatus as recited in claim 4, wherein the at least one illumination source is disposed below the auxiliary surface (112).

6. The apparatus as recited in claim 1, further comprising at least one illumination source disposed adjacent to the projection members (120).

7. The apparatus as recited in claim 6, wherein the at least one illumination source is disposed below the auxiliary surface (112).

8. The apparatus as recited in claim 1, further comprising at least one inductive charger disposed adjacent to the pocket (130).

9. A method comprising:
moving two or more projection members(110) from a first position(C) to a second position(D), in the first position(C) the two or more projection members(120) are recessed below an auxiliary surface(112) having an outer skin(110), the two or more projection members(120) projected through the auxiliary surface(112) in the second position(D), in the second position(D) the two or more projection members(120) stretching the outer skin(110) away from the auxiliary surface(112) creating a pocket(130) with the two or more projection members(120) to retain at least one device(190) including at least one of a key fob and cell phone (190) therein and
the outer skin(110) is moved back from the created pocket(130) to the auxiliary surface(112) when the two or more projection members(120) move from the second(D) to the first position(C).

10. The method as recited in claim 9, further comprising illuminating the pocket (130) with at least one illumination source disposed adjacent to the pocket (130).

11. The method as recited in claim 10, wherein illuminating the pocket includes illuminating with at least one illumination source disposed below the auxiliary surface (112).

12. The method as recited in claim 9, further comprising illuminating the projection members with at least one illumination source disposed adjacent to the pocket (130).

13. The method as recited in claim 12, wherein illuminating the projection members includes illuminating with at least one illumination source disposed below the auxiliary surface (112).

14. The method as recited in claim 9, further comprising moving the projection members from the second position (D) to the first position (C).

15. The method as recited in claim 9, further comprising disposing the device within the pocket (130).

16. The method as recited in claim 9, further comprising charging the device in the pocket (130) with an inductive charger.

## Patentansprüche

1. Vorrichtung mit veränderlicher Oberfläche, Folgendes aufweisend:
zwei oder mehrere Vorsprungselemente (120), die von mindestens einer ersten Stellung (C) in eine zweite Stellung (D) und von der zweiten Stellung (D) in die erste Stellung (C) beweglich sind;
wobei die Vorsprungselemente (120) in der ersten Stellung (C) unter eine Hilfsfläche (112) mit einer Außenhaut (110) vertieft sind;
wobei das Vorsprungselement (120) in der zweiten Stellung (D) durch die Hilfsfläche (112) hindurch vorsteht; wobei die Vorsprungselemente (120) in der zweiten Stellung (D) die Außenhaut (110) von der Hilfsfläche (112) weg ausdehnen und eine Tasche (130) erzeugen;
wobei die Außenhaut (110) von der erzeugten Tasche (130) zurück zur Hilfsfläche (112) beweglich ist, wenn sich die zwei oder mehreren Vorsprungselemente (120) von der zweiten (D) in die erste Stellung (C) bewegen, und
wobei die Tasche (130) dazu ausgebildet ist, mindestens ein Gerät darin zu halten, wobei das mindestens eine Gerät ein Schlüsselanhänger und/oder ein Mobiltelefon (190) ist.

2. Vorrichtung nach Anspruch 1, ferner aufweisend vier Vorsprungselemente, die in der zweiten Stellung (D) zusammen eine im Allgemeinen rechteckige Außenform aufweisen.

3. Vorrichtung nach Anspruch 1, ferner aufweisend einen Sensor, der an die Tasche (130) angrenzend angeordnet ist, wobei der Sensor dazu ausgebildet ist, die Nähe des mindestens einen Geräts (190) zu erfassen.

4. Vorrichtung nach Anspruch 1, ferner aufweisend mindestens eine Beleuchtungsquelle, die an die Tasche (130) angrenzend angeordnet ist.

5. Vorrichtung nach Anspruch 4, wobei die mindestens eine Beleuchtungsquelle unter der Hilfsfläche (112) angeordnet ist.

6. Vorrichtung nach Anspruch 1, ferner aufweisend mindestens eine Beleuchtungsquelle, die an die Vorsprungselemente (120) angrenzend angeordnet ist.

7. Vorrichtung nach Anspruch 6, wobei die mindestens eine Beleuchtungsquelle unter der Hilfsfläche (112) angeordnet ist.

8. Vorrichtung nach Anspruch 1, ferner aufweisend mindestens ein induktives Ladegerät, das an die Tasche (130) angrenzend angeordnet ist.

9. Verfahren, Folgendes aufweisend: Bewegen zweier oder mehrerer Vorsprungselemente (110) von einer ersten Stellung (C) in eine zweite Stellung (D), wobei die zwei oder mehreren Vorsprungselemente (120) in der ersten Stellung (C) unter eine Hilfsfläche (112) mit einer Außenhaut (110) vertieft sind, wobei die zwei oder mehreren Vorsprungselemente (120) in der zweiten Stellung (D) durch die Hilfsfläche (112) hindurch vorstehen, wobei die zwei oder mehreren Vorsprungselemente (120) in der zweiten Stellung (D) die Außenhaut (110) von der Hilfsfläche (112) weg ausdehnen und eine Tasche (130) erzeugen, wobei die zwei oder mehreren Vorsprungselemente (120) mindestens ein Gerät (190) darin halten sollen, das einen Schlüsselanhänger und/oder ein Mobiltelefon (190) umfasst, und wobei die Außenhaut (110) von der erzeugten Tasche (130) zurück zur Hilfsfläche (112) bewegt wird, wenn sich die zwei oder mehreren Vorsprungselemente (120) von der zweiten (D) in die erste Stellung (C) bewegen.

10. Verfahren nach Anspruch 9, ferner aufweisend Beleuchten der Tasche (130) mit mindestens einer Beleuchtungsquelle, die an die Tasche (130) angrenzend angeordnet ist.

11. Verfahren nach Anspruch 10, wobei das Beleuchten der Tasche das Beleuchten mit mindestens einer Beleuchtungsquelle, die unter der Hilfsfläche (112) angeordnet ist, umfasst.

12. Verfahren nach Anspruch 9, ferner aufweisend Beleuchten der Vorsprungselemente mit mindestens einer Beleuchtungsquelle, die an die Tasche (130) angrenzend angeordnet ist.

13. Verfahren nach Anspruch 12, wobei das Beleuchten der Vorsprungselemente das Beleuchten mit mindestens einer Beleuchtungsquelle, die unter der Hilfsfläche (112) angeordnet ist, umfasst.

14. Verfahren nach Anspruch 9, ferner aufweisend Bewegen der Vorsprungselemente von der zweiten Stellung (D) in die erste Stellung (C).

15. Verfahren nach Anspruch 9, ferner aufweisend Anordnen des Geräts innerhalb der Tasche (130).

16. Verfahren nach Anspruch 9, ferner aufweisend Laden des Geräts innerhalb der Tasche (130) mit einem induktiven Ladegerät.

## Revendications

1. Appareil à surface changeante comprenant:
au moins deux éléments déployables en saillie (120) mobiles d'au moins une première position (C) à une seconde position (D) et de la seconde position (D) à la première position (C);
les éléments déployables en saillie (120) étant, dans la première position (C), rétractés sous une surface auxiliaire (112) comportant un revêtement extérieur (110);
l'élément déployable en saillie (120) étant déployé en saillie à travers la surface auxiliaire (112) dans la seconde position (D);
les éléments déployables en saillie (120), dans la seconde position (D), étirant le revêtement extérieur (110) dans une direction s'éloignant de la surface auxiliaire (112) et créant une poche (130);
le revêtement extérieur (110) pouvant être ramené de la poche (130) créée à la surface auxiliaire (112) lorsque les au moins deux éléments déployables en saillie (120) se déplacent de la seconde (D) à la première (C) position; et
la poche (130) étant conçue pour retenir au moins un dispositif dans celle-ci, l'au moins un dispositif comprenant une clé électronique et/ou un téléphone mobile (190).

2. Appareil selon la revendication 1, comprenant, en outre, quatre éléments déployables en saillie définissant collectivement une forme extérieure globalement rectangulaire dans la seconde position (D).

3. Appareil selon la revendication 1, comprenant, en outre, un capteur disposé de manière adjacente à la poche (130), le capteur étant conçu pour détecter la proximité de l'au moins un dispositif (190).

4. Appareil selon la revendication 1, comprenant, en outre, au moins une source d'éclairage disposée de manière adjacente à la poche (130).

5. Appareil selon la revendication 4, dans lequel l'au moins une source d'éclairage est disposée sous la surface auxiliaire (112).

6. Appareil selon la revendication 1, comprenant, en outre, au moins une source d'éclairage disposée de manière adjacente aux éléments déployables en saillie (120).

7. Appareil selon la revendication 6, dans lequel l'au moins une source d'éclairage est disposée sous la surface auxiliaire (112).

8. Appareil selon la revendication 1, comprenant, en outre, au moins un chargeur à induction disposé de manière adjacente à la poche (130).

9. Procédé comprenant:
le déplacement d'au moins deux éléments déployables en saillie (110) d'une première position (C) à une seconde position (D), les au moins deux éléments déployables en saillie (120) étant, dans la première position (C), rétractés sous une surface auxiliaire (112) comportant un revêtement extérieur (110), les au moins deux éléments déployables en saillie (120) étant déployés en saillie à travers la surface auxiliaire (112) dans la seconde position (D), les au moins deux éléments déployables en saillie (120), dans la seconde position (D), étirant le revêtement extérieur (110) dans une direction s'éloignant de la surface auxiliaire (112);
la création d'une poche (130) à l'aide des au moins deux éléments déployables en saillie (120) pour retenir au moins un dispositif (190) comprenant une clé électronique et/ou un téléphone mobile (190) dans celle-ci; et
le revêtement extérieur (110) étant ramené de la poche (130) créée à la surface auxiliaire (112) lorsque les au moins deux éléments déployables en saillie (120) se déplacent de la seconde (D) à la première (C) position.

10. Procédé selon la revendication 9, comprenant, en outre, l'éclairage de la poche (130) à l'aide d'au moins une source d'éclairage disposée de manière adjacente à la poche (130).

11. Procédé selon la revendication 10, dans lequel l'éclairage de la poche comprend l'éclairage à l'aide d'au moins une source d'éclairage disposée sous la surface auxiliaire (112).

12. Procédé selon la revendication 9, comprenant, en outre, l'éclairage des éléments déployables en saillie à l'aide d'au moins une source d'éclairage disposée de manière adjacente à la poche (130).

13. Procédé selon la revendication 12, dans lequel l'éclairage des éléments déployables en saillie comprend l'éclairage à l'aide d'au moins une source d'éclairage disposée sous la surface auxiliaire (112).

14. Procédé selon la revendication 9, comprenant, en outre, le déplacement des éléments déployables en saillie de la seconde position (D) à la première position (C).

15. Procédé selon la revendication 9, comprenant, en outre, la disposition du dispositif à l'intérieur de la poche (130).

16. Procédé selon la revendication 9, comprenant, en outre, la charge du dispositif dans la poche (130) à l'aide d'un chargeur à induction.
